# Europäisches Patentamt
# European Patent Office
# Office européen des brevets

(11) Veröffentlichungsnummer: **0 193 093**
**B1**

(12) **EUROPÄISCHE PATENTSCHRIFT**

(45) Veröffentlichungstag der Patentschrift:
31.05.89

(51) Int. Cl.⁴: **H 02 M 3/335**

(21) Anmeldenummer: **86102142.6**

(22) Anmeldetag: **19.02.86**

(54) **Primärseitig getakteter Eintaktdurchflusswandler.**

(30) Priorität: **25.02.85 DE 3506575**

(43) Veröffentlichungstag der Anmeldung:
**03.09.86 Patentblatt 86/36**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**EP-A-0 048 934**
**EP-A-0 111 365**

(73) Patentinhaber: **Siemens Aktiengesellschaft Berlin und München, Wittelsbacherplatz 2, D-8000 München 2 (DE)**

(72) Erfinder: **Ney, Janusz, Dipl.- Ing., Kapellenstrasse 8, D-8939 Igling (DE)**
Erfinder: **Bartussek, Horst, Dr.- Schmelzing- Strasse 85, D-8900 Augsburg (DE)**

LIBER, STOCKHOLM 1989

**Beschreibung**

Die Erfindung betrifft einen primärseitig getakteten Eintaktdurchflußwandler nach den Merkmalen des Oberbegriffs des Anspruchs 1.

Kommunikationsendgeräte, die für sogenannte integrierte Dienste geeignet sind, zeichnen sich vor allem durch eine kompakte Form aus, so daß sie auf jedem Schreibtisch Platz finden, wobei die hauptsächlichen Komponenten, wie Tastatur und Telefonhörer mit Ablage, unabhängig voneinander positioniert und benutzt werden können.

Durch die Kompaktheit dieser Geräte muß die zugehörige Stromversorgung auf einem relativ engen Raum untergebracht werden, was Probleme mit der Wärmeabfuhr aber auch mit der Abmessung der Stromversorgung aufwirft. Außerdem muß die Stromversorgung wegen der Vielzahl der zu versorgenden Komponenten mehrere verschiedene Ausgangsspannungen bereitstellen, wobei in Abhängigkeit von der jeweiligen Betriebsweise - Vollbetrieb oder Beistellbetrieb - gleichzeitig alle Ausgangsspannungen oder nur ein Teil dieser Ausgangsspannungen verfügbar sein muß.

Ein Schaltnetzteil mit mehreren Ausgangskreisen ist zum Beispiel aus der EP-A-111 365 bekannt, wobei einzelne Ausgangskreise im Bedarfsfall abgeschaltet werden können. Die Abschaltung eines Ausgangskreises mit Hilfe eines Schalters bei einer ebenfalls mehrere Ausgangskreise aufweisenden Stromversorgungseinrichtung ist ferner aus der EP-A-0 048 934 bekannt.

Der vorliegenden Erfindung liegt nun die Aufgabe zugrunde, einen primärseitig getakteten Eintaktdurchflußwandler der im Oberbegriff des Anspruchs 1 genannten Art so auszubilden, daß die Ausgangskreise je nach Betriebsweise - Vollbetrieb und/oder Beistellbetrieb - mit einfachen Mitteln sowohl zu- und abgeschaltet als auch untereinander so verbunden werden können, daß der schaltungstechnische Aufwand zur Bereitstellung mehrerer unabhängiger Ausgangsspannungen bei optimaler Ausnutzung der einzelnen Schaltungskomponenten möglichst gering gehalten werden kann.

Die Lösung dieser Aufgabe ergibt sich erfindungsgemäß durch die kennzeichnenden Merkmale des Anspruchs 1.

Vorteilhafte Weiterbildungen der Erfindung sind in den Unteransprüchen angegeben.

Durch die erfindungsgemäßen Maßnahmen erhält man einen Eintaktdurchflußwandler, bei dem im Beistellbetrieb nicht benötigte Gleichspannungen abgeschaltet werden können. Dadurch, daß sowohl im Vollbetrieb als auch im Beistellbetrieb alle Hauptbestandteile der Schaltung verwendet werden, lassen sich Bauteilekosten und Volumen einsparen. Außerdem wird dadurch ein hoher Wirkungsgrad und eine hohe Zuverlässigkeit der Schaltung erreicht.

Anhand des Prinzipschaltbilds nach Figur 1 und der Ausführungsbeispiele nach den Figuren 2 und 3 wird die Erfindung näher erläutert.
Es zeigen

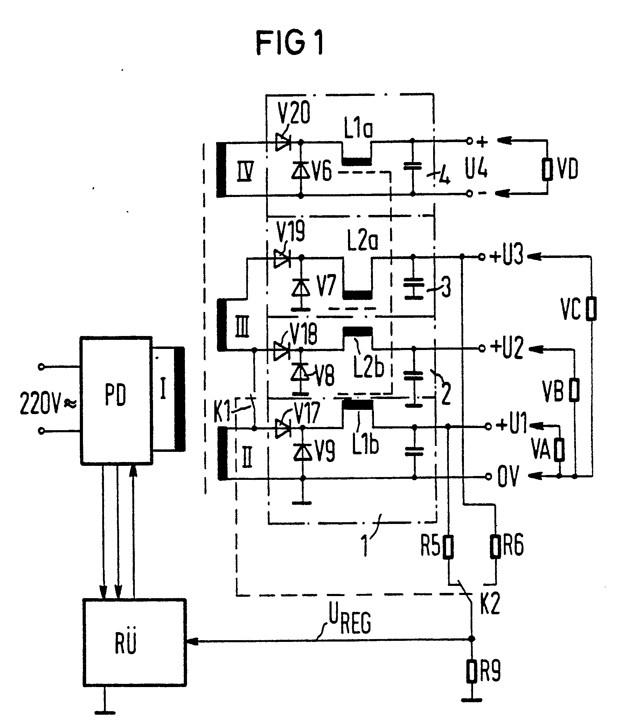

FIG 1 ein Prinzipschaltbild des Eintaktdurchflußwandlers,

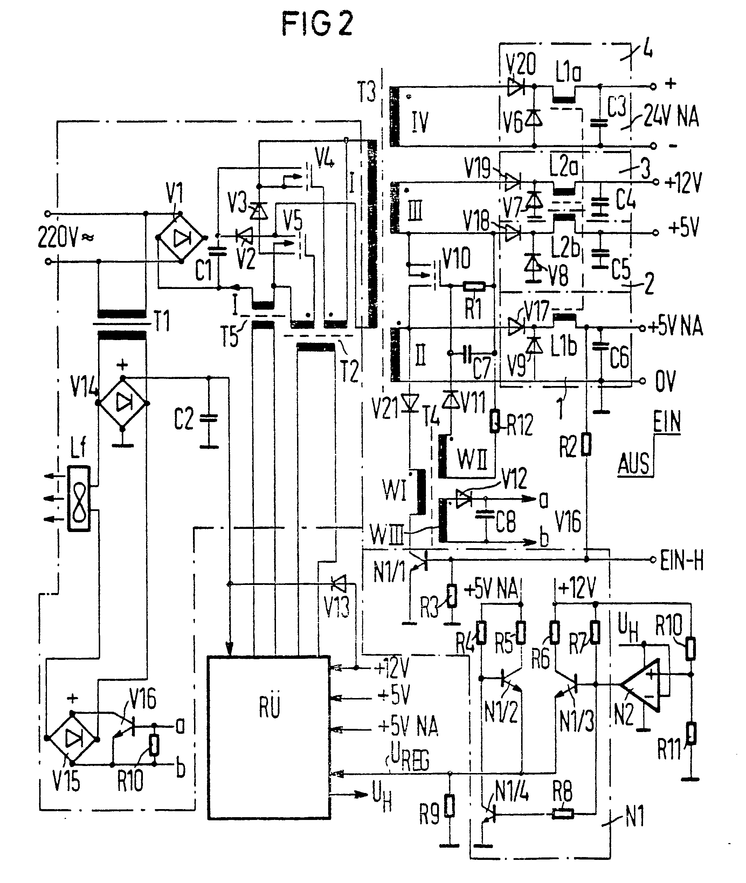

FIG 2 eine erste Ausführungsform, und

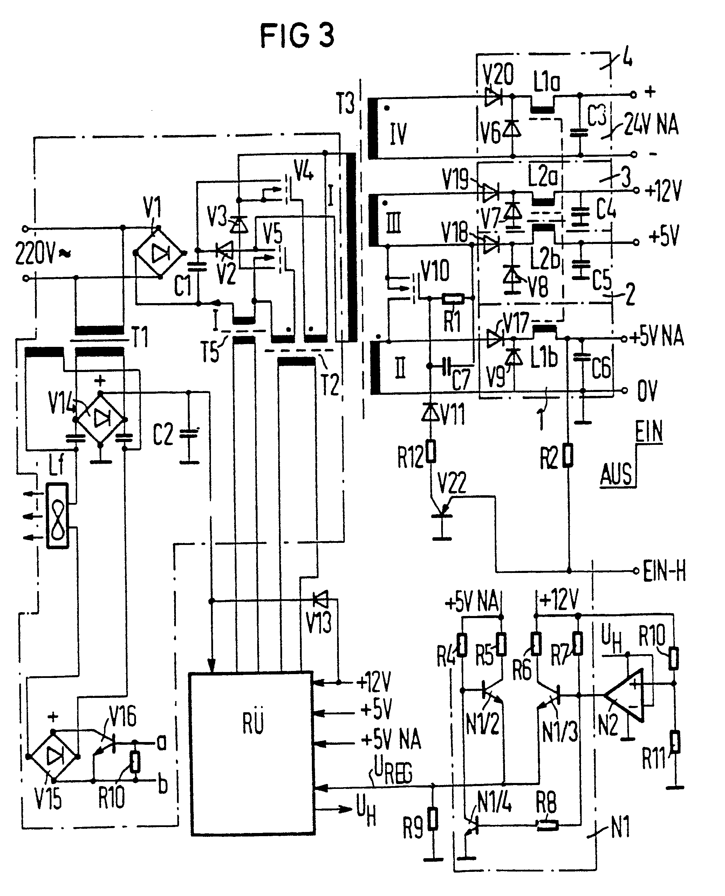

FIG 3 eine zweite Ausführungsform.

Die Primärseite PD des Durchflußwandlers und die Regel- und Überwachungsbaugruppe RÜ sind als Blockschaltbild dargestellt. Die Primärwicklung I des Übertragers T3 speist drei Sekundärwicklungen II, III, IV, denen Ausgangskreise nach dem Durchflußprinzip nachgeschaltet sind. Dabei weist jeder Ausgangskreis eine Gleichrichterdiode V17, V18, V19, V20, die dazugehörige Speicherdrossel L1a, L1b, L2a, L2b, die Freilaufdiode V9, V8, V7, V6 und die ersten Glättungskondensatoren C3, C4, C5, C6 auf.

Die Gleichrichterdioden sind dabei in Reihe zur Speicherdrossel geschaltet, die Freilaufdiode liegt dazu parallel. An den Ausgängen der Ausgangskreise 1, 2, 3, 4 stehen die Spannungen U1, U2, U3 und U4 an, die die Verbraucher VA, VB, VC und VD speisen.

Zwischen dem Anfang der ersten Sekundärwicklung II und dem Ende der zweiten Sekundärwicklung III liegt ein Schalter K1, während der spannungsführende Ausgang des ersten Ausgangskreises 1 über einen Ohm'schen Widerstand R5 mit einem ersten Umschaltkontakt eines Umschalters K2, verbunden ist. Der zweite Umschaltekontakt des Umschalres K2 ist über einen zweiten Ohm'schen Widerstand R6 an den stormführenden Ausgang der zweiten Sekunddärwicklung III des ersten Übertragers T3 geführt. Ferner ist der beiden Umschaltekontakten gemeinsame Kontakt des Umschalters K2 sowohl mit dem Eingang der Regelungs- und Überwachungsbaugruppe RÜ als auch über einen dritten Ohm'schen Widerstand R9 mit Masse verbunden.

Die zweite Sekundärwicklung III des ersten Übertragers T3 weist sowohl am Wicklungsanfang als auch an ihrem Wicklungsende je eine Gleichrichterdiode V18, V19 auf, denen jeweils entsprechende Speicherdrosseln L2a bzw. L2b nachgeschaltet sind. Diese Konstruktion ermöglicht die Speisung von gleichzeitig zwei Verbrauchern und in Kombination mit dem Schalter K1 ein Abschalten des zweiten Verbrauchers VB und des dritten Verbrauchers VC.

Im Parallelbetrieb werden die nicht abschaltbaren Spannungen erzeugt. In diesem Zustand ist der Schalter K1 offen und der Umschalter K2 verbindet den Widerstand R5 mit R9. Die Spannung für den ersten Verbraucher VA (5 Volt) wird in diesem Falle geregelt. Der Schalter K1 ist bei Vollbetrieb geschlossen, der Umschalter K2 schließt den Widerstand R6 mit dem Widerstand R9 zusammen. In diesem Fall wird also die Spannung des dritten Verbrauchers VC (12 Volt) geregelt.

In FIG 2 ist die technische Verwirklichung der Prinzipschaltung nach FIG 1 dargestellt. Der dem Netzgleichrichter V1 eingangsseitig parallel geschaltete Transformator T1 dient dazu, die Regel- und Überwachungsschaltung RÜ beim Einschalten und im Parallelbetrieb zu speisen. Bei Vollbetrieb wird in bestimmten Betriebszuständen die Regel- und Überwachungsschaltung RÜ mit Hilfe der ersten Diode V13 von der obengenannten Spannung gespeist. Der Stromvandler T5 überwacht den im Primärkreis fließenden Strom. Wenn der Strom die zulässige Grenze überschreitet, z. B. beim Kurzschluß am Ausgang, werden die Ansteuersignale für die Schalttransistoren V4 und V5 gesperrt und die Stromversorgung über die Überwachungslogik abgeschaltet. Abermaliges Einschalten erfolgt durch Aus- und Wiedereinschalten des Netzes.

Der Schalter K1 und der Umschalter K2 in der Anordnung nach FIG 1 sind in der technischen Ausführung durch Halbleiter verwirklicht, nämlich der Schalter K1 durch einen MOS-Transistor V10 und der Umschalter K2 durch einen integrierten Schaltkreis. Der als MOS-Transistor V10 ausgebildete Schalter K1 wird potentialgetrennt durch die erste Sekundärwicklung WII des dritten Übertragers T4 mit nachfolgender Gleichrichtung durch die zweite Diode V11 und Glättung der Wechselspannung mit dem zweiten Kondensator C7 eingeschaltet. Der Wechselspannungslüfter der Stromversorgung wird in ähnlicher Weise durch die zweite Sekundärwicklung WIII des dritten Transformators T4, durch die dritte Diode V12 dem dritten Glättungskondensator C8, dem ersten Transistor V16 und dem Brückengleichrichter V15 mit der Netzwechselspannung verbunden. Die Primärwicklung WI des dritten Transformators T4 wird durch den Transistor N1/1, der sich in dem obengenannten integrierten Schaltkreis IC befindet, an die Rechteckwechselspannung der ersten Sekundärwicklung II des ersten Transformators T3 angeschaltet. Die vierte Diode V21 ermöglicht eine zuverlässige Abmagnetisierung des dritten Transformators T4. Die Spannungen des zweiten und dritten Verbrauchers VB, VC werden mit dem MOS-Transistor V10 langsam eingeschaltet, um ein Ansprechen der Strombegrenzung zu verhindern. Die Einschaltzeit wird durch den zweiten Kondensator C7 und den Ohm'schen Widerstand R12 bestimmt.

Die Funktion des Umschalters K2 in der Schaltungsanordnung nach FIG 1 übernimmt die als IC ausgebildete Schaltung mit den Transistoren N1/2, N1/3 und N1/4. Diese Schaltung wird durch den Operationsverstärker N2 gesteuert. An dem negativen Eingang des Operationsverstärkers N2 liegt die Referenzspannung $U_H$, die im Regelbaustein RÜ erzeugt wird. Am positiven Eingang wird die Ausgangsspannung des dritten Verbrauchers VC (12 Volt) mit Hilfe des Widerstandsteilers R10, R11 zugeführt. Wird die Anordnung im Beistellbetrieb gefahren, liegt der Ausgang des Operationsverstärkers auf dem 0 Volt-Potential. Damit wird der vierte Transistor N1/4 der integrierten Schaltung gesperrt. Der zweite Transistor N1/2 der integrierten Schaltung wird durch den am Ausgang für den ersten Verbraucher VA liegenden Basiswiderstand R4 in gesättigtem Zustand betrieben. Mit Hilfe des weiteren Widerstandsteilers aus den Widerständen R5, R9 wird die Spannung für den ersten Verbraucher VA (5 Volt NA) als Istwert der Regelschaltung zugeführt. Nach dem Anlegen des EIN-H-Signals laufen die Spannungen für den zweiten und dritten Verbraucher VB, VC (5 Volt und 12 Volt) langsam hoch. Der Ausgang des Operationsverstärkers N2 schaltet auf H, kurz bevor die Ausgangsspannung für den dritten Verbraucher die Sollspannung (12 Volt) erreicht. Die dritten und vierten Transistoren N1/3 und N1/4 der integrierten Schaltung IC werden leitend und der zweite Transistor N1/2 der integrierten Schaltung wird gesperrt. In diesem Zustand wird der Istwert für den Regelbaustein über den anderen Widerstandsteiler mit den Widerständen R6, R9 aus der Spannung für den dritten Verbraucher VC erzeugt.

Der Durchflußwandler nach FIG 3 hat die gleichen technischen Eigenschaften wie der in FIG 2 beschriebene. Die in FIG 2 beschriebene potentialfreie Ansteuerung des MOS-Transistors V10 wird in der Anordnung nach FIG 3 durch die galvanisch gekoppelte Schaltung mit dem zweiten Transistor V22, dem vierten Ohm'schen Widerstand R12, dem zweiten Kondensator C7 und dem zweiten Ohm'schen Widerstand R1 ersetzt. Mit dem Signal EIN-H wird der in Basisschaltung betriebene zweite Transistor V22, der als Konstantstromquelle arbeitet, angesteuert. Während der Abmagnetisierungsphase des ersten Transformators T3 wird die Quellenelektrode des MOS-Transistors V10 negativ. Bei leitendem zweiten Transistor V22 wird der zweite Kondensator C7 über den vierten Ohm'schen Widerstand R12 langsam aufgeladen. Der MOS-Transistor V10 wird leitend. Die zweite Diode V11 verhindert eine Entladung des zweiten Kondensators C7, wenn die Torelektrode des MOS-Transistors V10 während der Stromflußzeit positiv wird. Für die Versorgung des Lüfters Lf wird eine zweite Wicklung am Netztransformator T1 benötigt.

Die primärseitige Ausbildung des Durchflußwandlers entspricht vollkommen derjenigen nach FIG 2.

Bemerkenswert für den Vollzustand ist die Erzeugung der Spannungen für den ersten und zweiten Verbraucher VA, VB (5 Volt, 5 Volt NA) und einer Teilspannung für den dritten Verbraucher VC (12 Volt) aus der Wicklung II des ersten Transformators T3. Damit liegt die ersten Sekundärwicklung II des ersten Transformators T3 in Reihe mit dem MOS-Transistor V10 in der Regelschleife. Diese Schaltungsart gewährleistet geringe Ausgangsspannungsabhängigkeiten der Spannungen für den ersten und zweiten Verbraucher VA, VB (5 Volt; 5 Volt NA) von unterschiedlichen Lastströmen, da nur die Spannungsabfälle an der zweiten Freilaufdiode V8 und der zweiten Teilspeicherdrossel L2b bzw. der ersten Freilaufdiode V9 und der ersten Teilspeicherdrossel L1b im wesentlichen die Lastabhängigkeit bewirken. Die Ausführung der Speicherdrosseln L2, L1 als Doppeldrossel verringert ebenfalls die Lastabhängigkeit.

Die Anpassung der Ausgangsspannung an unterschiedliche Lastbereiche kann durch Wahl von Dioden mit unterschiedlichem Schleusenspannungen erfolgen. Für die Einschaltung in Vollbetrieb ist die spannungsabhängige Regelkreisumschaltung, für die Umschaltung in Beistellbetrieb die sofortige Umschaltung des Regelkreises auf +5V NA von Bedeutung.

Für die Umschaltung der Betriebszustände ist die spannungsabhängige Regelkreisumschaltung zur Vermeidung von Über- oder Unterspannungen von Bedeutung.

## Patentansprüche

1. Primärseitig getakteter und mit einem Regler versehener Eintaktdurchflußwandler mit mehreren über Sekundärwicklungen des Transformators angeschlossenen, jeweils aus Gleichrichterdiode, Speicherdrossel, Freilaufdiode und Glättungskondensator bestehenden Ausgangskreisen, die jeweils einen Gleichstromverbraucher versorgen, dadurch gekennzeichnet, daß mindestens einer Sekundärwicklung (T3 III) ein weiterer Ausgangskreis (2) derart zugeordnet ist, daß jeweils die eine Gleichrichterdiode (V19) mit der dazugehörigen Speicherdrossel (L2a) am Wicklungsanfang und die andere Gleichrichterdiode (V18) mit seiner Speicherdrossen (L2b) am Wicklungsende der einen Sekundärwicklung (T3 III) und mindestens eine der zugehörigen Freilaufdioden (V7, V8) und die Glättungskondensatoren (C4, C5) mit ihrem jeweils einen Anschluß an Masse liegen, daß zwischen dem Wicklungsende dieser einen Sekundärwicklung (T3 III) und dem Wicklungsanfang mindestens einer weiteren Sekundärwicklung (T3 II) ein Schalter (K1) liegt, und daß ein in Abhängigkeit von dem Schalter (K1) betätigter Umschalter (K2) mit seinem ersten Umschaltekontakt über einen ersten Ohm'schen Widerstand (R5) an den spannungsführenden Ausgang eines sekundärseitig angeschlossenen Ausgangskreises (1) und der zweite Umschaltekontakt über einen zweiten Ohm'schen Widerstand (R6) an den spannungsführenden Ausgang eines anderen der sekundärseitig angeschlossenen Ausgangskreise (3) liegt, und daß der beiden Umschaltekontakten gemeinsame Kontakt des Umschalters (K2) sowohl über einen dritten Ohm'schen Widerstand (R9) an Masse als auch an den Eingang des Reglers (RÜ) geführt ist.

2. Eintaktdurchflußwandler nach Anspruch 1, dadurch gekennzeichnet, daß der Schalter (K1) und der Umschalter (K2) als Halbleiterschalter ausgebildet sind.

3. Eintaktdurchflußwandler nach Anspruch 2, dadurch gekennzeichnet, daß der Schalter (K1) so dimensioniert ist, daß bei seinem Einschalten die Spannung zeitlich definiert ansteigt und daß der Umschalter (K2) erst unmittelbar vor Erreichen der Sollspannung betätigt wird.

## Claims

1. Primary chopped forward converter, provided with a controller and having a plurality of output circuits which are connected via secondary windings of the transformer, consist in each case of rectifier diode, storage inductor, freewheeling diode and smoothing capacitor and supply in each case a direct-current load, characterized in that at least one secondary winding (T3 III) is assigned a further output circuit (2) in such a way that the one rectifier diode (V19) with the associated storage inductor (L2a) is connected at the start of the winding and the other rectifier diode (V18) with its storage inductor (L2b) is connected at the end of the winding of the secondary winding (T3 III) and at least one of the associated freewheeling diodes (V7, V8) and the smoothing capacitors (C4, C5) with their respective one terminal are connected to earth, in that between the end of the winding of this one secondary winding (T3 III) and the start of the winding of at least one further secondary winding (T3 II) there lies a switch (K1), and in that a changeover switch (K2), operated in dependence on the switch (K1), is connected by its first changeover contact via a first ohmic resistor (R5) to the live output of a secondary-connected output circuit (1) and the second changeover contact is connected via a second ohmic resistor (R6) to the live output of another of the secondary-connected output circuits (3), and in that a contact of the changeover switch (K2) shared by the two changeover contacts is led both via a third ohmic resistor (R9) to earth and to the input of the controller (RÜ).

2. Forward converter according to claim 1, characterized in that the switch (K1) and the changeover switch (K2) are designed as semiconductor switches.

3. Forward converter according to claim 2, characterized in that the switch (K1) is dimensioned such that, on switching on, the voltage rises as a defined function of time and in that the changeover switch (K2) is operated only immediately before reaching the set voltage.

**Revendications**

1. Convertisseur direct simple alternance commandé de façon cadencée sur le côté primaire et comportant un régulateur et plusieurs circuits de sortie raccordés par l'intermédiaire d'enroulements secondaires du transformateur et constitués chacun par une diode redresseuse, une bobine d'accumulation, une diode unidirectionnelle et un condensateur de lissage et alimentant chacun un appareil d'utilisation à courant continu, caractérisé par le fait qu'un autre circuit de sortie (2) est associé à au moins un enroulement secondaire (T3 III), de telle sorte que respectivement une diode redresseuse (V19) munie de la bobine d'accumulation associée (L2a) et l'autre diode redresseuse (V18) munie de sa bobine d'accumulation (L2b) sont raccordées respectivement au début et à la fin d'un enroulement secondaire (T3 III) et qu'au moins l'une des diodes unidirectionnelles associées (V7, V8) et les condensateurs de lissage (C4, C5) sont raccordés par des premières bornes respectives à la masse, qu'un interrupteur (K1) est branché entre l'extrémité de ce premier enroulement (T3 III) et le début d'au moins un autre enroulement secondaire (T3 II), et qu'un commutateur (K2) actionné en fonction de l'interrupteur (K1) est raccordé par son premier contact de commutation, par l'intermédiaire d'une première résistance ohmique (R5), à la sortie sous tension d'un circuit de sortie (1) raccorde sur le côté secondaire et que le second contact de commutation est raccordé, par l'intermédiaire d'une seconde résistance ohmique (R6), à la sortie sous tension d'un autre des circuits de sortie (3) raccordés sur le côté secondaire, et que le contact, commun aux deux contacts de commutation, du commutateur (K2) est raccordé à la masse, par l'intermédiaire d'une troisième résistance ohmique (R9), et également à l'entrée du régulateur (RÜ).

2. Convertisseur direct simple alternance suivant la revendication 1, caractérisé par le fait que l'interrupteur (K1) et le commutateur (K2) sont réalisés sous la forme de commutateurs à semiconducteurs.

3. Convertisseur direct simple alternance suivant la revendication 2, caractérisé par le fait que l'interrupteur (K1) est dimensionné de telle sorte que, lors de sa fermeture, la tension augmente d'une manière définie dans le temps et que le commutateur (K2) est actionné seulement juste avant que la tension de consigne soit atteinte.

# FIG 1

# FIG 2

# FIG 3